# EUROPÄISCHE PATENTSCHRIFT

(11) **EP 2 173 540 B1**
(45) Veröffentlichungstag und Bekanntmachung des Hinweises auf die Patenterteilung: **02.03.2016**
(21) Anmeldenummer: 08750336.3
(22) Anmeldetag: 19.05.2008
(51) Int. Cl.: B29C 73/16, B29L 30/00

(54) **REIFENDICHTMITTEL**
TIRE SEALANT
AGENT D'ÉTANCHÉITÉ POUR PNEUMATIQUES

(30) Priorität: 25.07.2007 DE 102007035192
(43) Veröffentlichungstag der Anmeldung: 14.04.2010
(73) Patentinhaber: Continental Reifen Deutschland GmbH, 30165 Hannover (DE)
(72) Erfinder: BOURGEOIS, Stefan, 30161 Hannover (DE); BÖDECKER, Alexander, 30890 Barsinghausen (DE); SCHUNACK, Michael, 30161 Hannover (DE)
(74) Vertreter: Finger, Karsten
(86) Internationale Anmeldenummer: PCT/EP2008/056088
(87) Internationale Veröffentlichungsnummer: WO 2009/013038

(56) Entgegenhaltungen:
- DE-A1- 2 706 212
- DE-A1- 2 725 673
- US-A- 3 483 053
- US-A- 4 713 114
- US-A- 5 364 463
- US-A- 5 772 747
- US-A- 6 013 697
- US-A1- 2006 054 261

## Beschreibung

Die Erfindung betrifft ein Reifendichtmittel zum Abdichten der Beschädigungsstelle, insbesondere der Einstichstelle, eines Reifens, das nach seinem Einbringen in den Reifen durch Drehen des Rades an der Reifeninnenwandung verteilt wird, wobei das Reifendichtmittel in und/oder an die Beschädigungsstelle bzw. Einstichstelle dringt und diese verschließt.

Hinsichtlich des diesbezüglichen Standes der Technik von Reifendichtmitteln bei Einsatz von Beschädigungen, beispielsweise beim Durchstechen der Lauffläche mittels eines Nagels, wird insbesondere auf folgende Druckschriften verwiesen:
(1) DE 26 31 691 A1
(2) US 4 068 027
(3) US 4 113 799
(4) US 4 289 089
(5) GB 2 411 158
(6) US 3 628 585
(7) EP 0 511 570 A1
(8) US 6 013 697

In der Offenlegungsschrift (1) wird ein Reifendichtmittel vorgestellt, das bei einem durch die Lauffläche des Reifens hindurchgehenden Loch eine Selbstheilung bewirkt. Das Reifendichtmittel auf der Basis einer verstärkten, partiell vernetzten Matrix aus einem Copolymerisat mit mittlerem bis hohem Molekulargewicht wird auf die Innenfläche von Gummireifen aufgebracht und dient zur Abdichtung von Löchern im Laufflächenbereich unter stark variierenden Temperaturbedingungen (-30 bis + 130°C). Bei der Herstellung des Reifendichtmittels kommen Lösungsmittel, wie Toluol, Hexan, Heptan, Naphtha, Trichlorethylen, Cyclohexan und Tedrahydrofuran, zum Einsatz.

In der Patentschrift (2) wird ein Reifendichtmittel auf der Basis eines vernetzten Butylkautschuks beschrieben. Das Reifendichtmittel besteht dabei aus zwei Komponenten, wobei wiederum eine den Butylkautschuk umfasst. Diese beiden Komponenten werden kurz vor dem Einbringen in den Reifen zusammengemischt. Dabei wird die Kautschukkomponente mittels eines Lösungsmittels, beispielsweise Hexan, auf verarbeitbare Viskositäten verdünnt.

Die Patentschrift (3) befasst sich ebenfalls mit einem Reifendichtmittel auf der Basis von Butylkautschuk, der verstärkt und partiell vernetzt ist. Es besteht ebenfalls aus zwei Komponenten, wobei hier zwei unterschiedliche Butylkautschutypen eingesetzt werden. Ansonsten wird hier auf die bereits vorgestellte Lehre gemäß Offenlegungsschrift (1) verwiesen.

In der Patentschrift (4) wird eine Vorrichtung zum Positionieren einer Arbeitseinheit zwischen den Seitenwänden vorgestellt, mit der das Reifendichtmittel, insbesondere die der vorbeschriebenen Art, in einen Reifen appliziert werden kann.

In der Offenlegungsschrift (5) wird ein Reifendichtmittel mit pseudoplastischen, thixotropen und viskosen Eigenschaften beschrieben, in das Fasern, beispielsweise RayonFasern, eingemischt sind. Die Fasern selbst haben im Wesentlichen eine Verstärkungsfunktion. Verwendet wird dabei unter anderem ein Bindemittel in Form einer PVA-Emulsion.

Die Patentschrift (6) befasst sich mit einem Reifendichtmittel, das ein Polyurethan-Elastomer als Basismatrix und Verstärkungspartikel, dispergiert in beispielsweise Dimethylsulfoxid, umfasst.

In der Offenlegungsschrift (7) werden Gelmassen auf der Basis von Reaktionsprodukten aus Polyolen und Polyisocyanaten unter Bildung eines Polyurethans vorgestellt. Die Polyolkomponente besteht aus einem oder mehreren Polyol/en mit Hydroxylzahlen unter 112 und einem oder mehreren Polyol/en mit Hydroxylzahlen im Bereich 112 bis 600. Die Isocyanatkennzahl des Reaktionsgemisches liegt im Bereich von 15 bis 70. Diese Gelmassen können als druckverteilende Elemente verwendet werden. Als besonderer Einsatzzweck wird in dieser Druckschrift die Medizintechnik (Gel-Polster für Rollstühle, Krankenbetten, Anti-Dekubitus-Kissen etc) erwähnt. Auf der Basis derartiger Polyurethan-Gele werden zwischenzeitlich auch Reifendichtmittel hergestellt, unter anderem in Verbindung mit Faserzusätzen (Offenlegungsschrift 5).

In der Patentschrift (8), die den Oberbegriff des Anspruchs 1 offenbart, umfasst das Reifendichtmittel ein Gemisch aus Wasser und einem mehrwertigen Alkohol, in das Bentonit sowie ein mineralischer, plättchenförmiger Zusatz dispergiert sind. Der plättchenförmige Zusatz legt sich dabei brückenartig (lockere Brückenbildung) über die abzudichtende Beschädigung, während das Bentonit die noch vorhandenen Lücken abdichtet.

In Bezug auf den hier zitierten Stand der Technik der Reifendichtmittel bleibt zusammenfassend folgendes festzuhalten:
- Reifendichtmittel auf Kautschukbasis (Druckschriften 1 bis 4) zeichnen sich durch eine gute Dichtwirkung aus. Allerdings müssen die Kautschukkomponenten mit organischen Lösungsmitteln auf verarbeitbare Viskositäten verdünnt werden. Diese Lösungsmittel sind jedoch brennbar und gesundheitsschädlich. Auch haben derartige Reifendichtmittel eine eingeschränkte Haltbarkeit. Die Herstellung lösungsmittelfreier Reifendichtmittel auf Kautschukbasis bildet daher eine von mehreren Entwicklungsrichtungen, insbesondere unter dem Aspekt der Verfahrenstechnologie (DE 102007023994.9).
- Reifendichtmittel auf gelförmiger oder ähnlicher Basis-(Druckschriften 5 bis 7), beispielsweise unter Einsatz von Polyurethan, mit eingemischten Verstärkungspartikeln, insbesondere in Form von Fasern, zeichnen sich dagegen durch eine lange Haltbarkeit aus. Das Einbringen derartiger Reifendichtmittel in den Reifen ist jedoch schwierig. Hinzu kommt, dass Fasern wie auch andere Verstärkungspartikel, das Ventil verstopfen können. Die Optimierung derartiger Reifendichtmittel bildet eine weitere Entwicklungsrichtung (EP 1985436).
- Reifendichtmittel auf der Basis eines wässrigen Dispersionsmittels, das wegen seiner nicht gesundheitsschädlichen Grundkonzeption, eine neuere Entwicklungsrichtung beinhaltet (Druckschrift 8), erfüllen trotz Haltbarkeit bislang nicht die geforderten Dichtwirkungen, insbesondere nicht unter den üblichen Reifenbelastungen.

Zwecks Vermeidung der oben genannten Nachteile, und zwar unter dem Aspekt einer Weiterentwicklung der Entwicklungsrichtung gemäß Druckschrift (8), zeichnet sich das neue Reifenmittel dadurch aus, dass das Reifendichtmittel als Dichtmittelkomponente einen Füllstoff in einem Anteil von 5 bis 75 Gew.-% enthält, dessen Dichtwirkung aus seiner Struktur resultiert, wobei der Füllstoff ein Silikat mit Plättchen oder Schichtstruktur ist oder aus Glasplättchen besteht und wobei der Füllstoff durch die Zentrifugalkraft beim Fahren an die Reifeninnenwandung gedrückt wird und sich dabei schichtenförmig an und/oder in und/oder über der Beschädigungsstelle bzw. Einstichstelle aufbaut und wobei das Reifendichtmittel als weitere Dichtmittelkomponente ein Bindemittel enthält, welches in Form einer Polymerdispersion auf der Basis eines Synthesekautschuklatex, ausgewählt aus der Gruppe, bestehend aus Polyurethan und/oder Polyester und/oder Silikonkautschuk und/oder Styrolbutadienkautschuklatex, vorliegt.

Im Gegensatz zu den bislang bekannten Reifendichtmitteln, bei denen zumeist dem Polymer, beispielsweise Butylkautschuk oder Polyurethan, die entscheidende Dichtmittelfunktion zukommt, übernimmt bei dem erfindungsgemäßen Reifendichtmittel im Wesentlichen der Füllstoff in Mengen von 5 bis 75 Gew.-% die Dichtwirkung, die vorteilhafterweise ausschließlich auf der Struktur des Füllstoffes beruht.

In diesem Zusammenhang weist der Füllstoff eine Plättchen (Blättchen)- oder Schichtstruktur auf, wobei wiederum mit diesen beiden Strukturbegriffen der Glimmer zu nennen ist. Glimmer sind wasserhaltige, elastische Silikate. In der Literatur werden sie auch als Schichtsilikate bezeichnet, die sehr leicht elastisch-biegsame Plättchen bilden. Zu erwähnen sind hier insbesondere der Muskovit-Glimmer, Lepidolith-Glimmer und Biotit-Glimmer.

Als Füllstoff können auch Glasplättchen zum Einsatz gelangen, die jedoch im Hintergrund einer geringen Elastizität nicht ganz die Bedeutung von Glimmer haben.

Der Anteil des Füllstoffes im Reifendichtmittel beträgt 5 bis 75 Gew.-%, insbesondere 15 bis 75 Gew.-%, insbesondere wiederum 15 bis 40 Gew.-%. Er weist dabei insbesondere eine Teilchengröße von 1 µm bis 2 mm auf.

Im Hinblick auf den Füllstoff des neunen Reifendichtmittels bleibt zusammenfassend folgendes festzuhalten:
- Im Unterschied zu den Reifendichtmitteln gemäß Druckschriften (1 bis 7) übernimmt anstelle des polymeren Werkstoffes der Füllstoff, der sich schichtenförmig an und/oder in und/oder über der Beschädigungsstelle bzw. Einstichstelle aufbaut, die wesentliche bzw. ausschließliche Dichtwirkung.
- Im Unterschied zu dem Reifendichtmittel gemäß der Lehre (8) übt der Füllstoff des neuen Reifendichtmittels keine lockere Brückenbildung aus, sondern übernimmt die Dichtwirkung in Form eines Schichtengebildes im Bereich der Beschädigungsstelle bzw. Einstichstelle. Das notwendige Ausfüllen der vorhandenen Lücken durch Bentonit bei einer Brückenbildung entfällt bei dem neuen Reifendichtmittel.

Das Reifendichtmittel umfasst ferner vorzugsweise ein Dispersionsmittel auf der Basis von Wasser, und zwar in einem Anteil von 25 bis 95 Gew.-%, insbesondere 25 bis 85 Gew.-%, insbesondere wiederum 60 bis 85 Gew.-%.

Vorteilhafterweise ist ein Teil des Dispersionsmittels in Form von Wasser durch ein Frostschutzmittel ersetzt. Das Frostschutzmittel kann insbesondere ein mehrwertiger Alkohol und/oder dessen Derivate oder Gemische davon sein, wobei wiederum insbesondere folgende Mittel zum Einsatz gelangen: Ethylenglykol und/oder 1,2-Propylenglykol und/oder Diethylenglykol und/oder Triethylenglykol.

Das Frostschutzmittel kann auch Betain, ein Trimethylderivat des Glycin, sein.

Diese hier erwähnten Frostschutzmittel bilden mit Wasser einerseits eine Dispersionsmittelgesamteinheit sowie andererseits eine Frostschutzfunktion, so dass das Reifendichtmittel auch bei extremen Kältegraden (bis <- 30°C) zum Einsatz gelangen kann.

In Bezug auf die Gesamtmenge an Dispersionsmittel beträgt der Anteil des Frostschutzmittels 1 bis 75 Teile, insbesondere 30 bis 75 Teile.

Das Reifendichtmittel umfasst ferner vorzugsweise ein Bindemittel in Form einer Polymerdispersion, insbesondere wiederum auf der Basis eines Synthesekautschuklatex. Zweckmäßigerweise kommt/kommen hier ein Polyurethan (PU)- und/oder ein Polyester- und/oder ein Silikonkautschuk- und/oder ein Styrol-Butadien-Kautschuklatex zum Einsatz.

Der Anteil des Bindemittels beträgt 0,1 bis 40 Gew.-%, insbesondere 1 bis 20 Gew.-%.

Im Gegensatz zu den bisher bekannten Reifendichtmitteln, bei denen das Polymer das Dichtmittel ist, übt hier das Polymer keine Dichtfunktion, sondern eine Bindefunktion aus. Das Bindemittel, beispielsweise in Form einer PU-Dispersion, dient daher lediglich zur zusätzlichen elastischen Verbindung der Füllstoffteilchen, um auch bei der Walkbewegung des Reifens oder durch Stöße durch den Fahrbahnuntergrund das Auseinanderfallen des Füllstoffes zu verhindern. Mit den oben genannten Polymerdispersionen ist eine optimale Bindemittelwirkung gewährleistet, wobei insbesondere eine PU-Dispersion zu erwähnen ist.

Das Reifendichtmittel umfasst insbesondere wenigstens die kombinativen Dichtmittelkomponenten aus Füllstoff und Dispersionsmittel und Bindemittel, wobei das Dispersionsmittel insbesondere teilweise durch ein Frostschutzmittel ersetzt ist.

Als weitere Dichtmittelkomponenten können ein Antiabsetzmittel, ein Stabilisator und ein Entschäumer eingesetzt werden, wobei diese Zusatzkomponenten im folgenden näher vorgestellt werden.

Das Antiabsetzmittel dient zur Stabilisierung der Mischung gegen Absetzen während der Lagerung, bedingt durch die Dichte und Korngrößenverteilung des Füllstoffes, speziell auch durch die Bewegungen und die Vibrationen im Fahrzeug, die sich auf das Dichtmittel auswirken.

Das Antiabsetzmittel ist ein Silikat, insbesondere wiederum ein Tonmineral, wobei diesbezüglich insbesondere folgende beiden Gruppen zu nennen sind:
- Das Tonmaterial ist aus der Gruppe der Smektite, wobei insbesondere Montmorillonit und Saponit zu erwähnen sind.
- Das Tonmaterial ist aus der Gruppe der Hormite, wobei hier insbesondere Palygorskit (ältere Bezeichnung "Attapulgit") und Sepiolith zu nennen sind.

Der Anteil des Antiabsetzmittels beträgt 0,01 bis 20 Gew.-%, insbesondere 0,01 bis 10 Gew.-%.

Ein Absetzen des Reifendichtmittels über längere Zeit kann ferner durch Aufschütteln mit Kugeln, beispielsweise wie bei Lackspraydosen, die mit in die Behälter (US 6 506 273 B1) zum Reifendichtmittel gegeben werden, wieder aufgehoben werden.

Neben dem Antiabsetzmittel der oben genannten Art kann zusätzlich ein ionischer und/oder nicht ionischer Stabilisator dem Reifendichtmittel beigemischt sein, insbesondere in Form von Seife und/oder eines Tensides.

Der Anteil des Stabilisators beträgt 0,01 bis 20 Gew.-%, insbesondere 0,01 bis 10 Gew.-%.

Schließlich kann das Reifendichtmittel noch mit einem Entschäumer versehen sein. Der Entschäumer hat unter anderem die Funktion, die Mischung beim Ansetzen der Mischung und vor einem möglichen vorherigen Aufschütteln des Dichtmittels vor der Verwendung nicht schaumig werden zu lassen, um die Verarbeitbarkeit durch eine mögliche Schaumbildung bzw. Schaumneigung zu unterdrücken.

Die in der Beschreibung und in den Ansprüchen erwähnten Gew.-% beziehen sich auf die Gesamtmasse des Reifendichtmittels.

Im Rahmen einer beispielhaften Zusammensetzung (Tabelle) wird das neue Reifendichtmittel zusammenfassend nochmals erläutert.

Als Füllstoff wurde Muskovit-Glimmer eingesetzt, der ein heller Glimmer ist, im Gegensatz zum dunklen Biotit-Glimmer. Muskovit ist ein Silikat im Strukturverbund mit Kalium und Aluminium. Er trägt in optimaler Weise zur Schichtenbildung und somit zur geforderten Dichtleistung bei.

Unter Einbezug des Wassers der 50%-igen PU-Dispersiori beträgt der Gesamtanteil an Wasser 27,9 Gew.-%. Das Bindemittel auf der Basis dieser PU-Dispersion (Emuldur DS 2361, BASF) dient zur elastischen Verbindung der Füllstoffteilchen, um auch bei der Walkbewegung des Reifens oder durch Stöße durch den Fahrbahnuntergrund das Auseinanderfallen der Glimmerschicht zu verhindern.

Der Anteil des Wassers würde ohne Frostschutzmittel bei ansonsten gleichen Anteilen der übrigen Dichtmittelkomponenten 67,9 Gew.-% betragen. Insgesamt 40 Gew.-% hiervon wurden hier jedoch durch ein Frostschutzmittelgemisch aus 1,2-Propylenglykol und Triethylenglykol ersetzt. In diesem Zusammenhang bilden das Wasser und die wasserlöslichen Glykole eine Dispersionsmittelgesamteinheit. Auf diese Weise wird in optimaler Weise noch zusätzlich die Verarbeitbarkeit des Reifendichtmittels bei tiefen Temperaturen bis <- 30°C gewährleistet.

**Tabelle**

| **Gew.-%** | **Dichtmittelkomponente** | **Funktion** |
|---|---|---|
| 25,0 | Muskovit-Glimmer | Füllstoff |
| 21,9 | Wasser | Dispersionsmittel |
| 30,0 | 1,2-Propylenglykol | Frostschutzmittel |
| 10,0 | Triethylenglykol | Frostschutzmittel |
| 12,0 | 50%-ige PU-Dispersion (Dispersionsmittel Wasser) | Bindemittel |
| 1,0 | Palygorskit (Altbezeichnung Attapulgit) | Antiabsetzmittel |
| 0,1 | Mineralöl/Silikonöl | Entschäumer |

Weitere Bestandteile in geringen Mengen bilden das Antiabsetzmittel und der Entschäumer.

Auf einen zusätzlichen Stabilisator, wie er in den Ansprüchen 43 bis 47 qualitativ wie auch quantitativ beschrieben ist, konnte bei dieser Zusammensetzung verzichtet werden.

Getestet wurde das neue Reifendichtmittel an einem PKW-Reifen.

## Patentansprüche

1. Reifendichtmittel zum Abdichten der Beschädigungsstelle, insbesondere der Einstichstelle, eines Reifens, das nach seinem Einbringen in den Reifen durch Drehen des Rades an der Reifeninnenwandung verteilt wird, wobei das Reifendichtmittel in und/oder an die Beschädigungsstelle bzw. Einstichstelle dringt und diese schließt, so dass keine Luft mehr aus dem Reifen entweichen kann, wobei das Reifendichtmittel als Dichtmittelkomponente einen Füllstoff in einem Anteil von 5 bis 75 Gew.-% enthält, dessen Dichtwirkung aus seiner Struktur resultiert, wobei der Füllstoff ein Silikat mit Plättchen oder Schichtstruktur ist oder aus Glasplättchen besteht und wobei der Füllstoff durch die Zentrifugalkraft beim Fahren an die Reifeninnenwandung gedrückt wird und sich dabei schichtenförmig an und/oder in und/oder über der Beschädigungsstelle bzw. Einstichstelle aufbaut und wobei das Reifendichtmittel als weitere Dichtmittelkomponente ein Bindemittel enthält, **dadurch gekennzeichnet, dass** das Bindemittel in Form einer Polymerdispersion auf der Basis eines Synthesekautschuklatex, ausgewählt aus der Gruppe, bestehend aus Polyurethan und/oder Polyester und/oder Silikonkautschuk und/oder Styrolbutadienkautschuklatex, vorliegt.

2. Reifendichtmittel nach Anspruch 1, **dadurch gekennzeichnet, dass** die Dichtwirkung ausschließlich auf der Struktur des Füllstoffes beruht.

3. Reifendichtmittel nach Anspruch 1, **dadurch gekennzeichnet, dass** der Füllstoff in Bezug auf das Silikat ein Glimmer ist.

4. Reifendichtmittel nach einem der Ansprüche 1 bis 3, **dadurch gekennzeichnet, dass** der Füllstoff eine Teilchengröße von 1 µm bis 2 mm aufweist.

5. Reifendichtmittel nach einem der Ansprüche 1 bis 4, **dadurch gekennzeichnet, dass** dieses ein Dispersionsmittel als weitere Dichtmittelkomponente enthält.

6. Reifendichtmittel nach Anspruch 5, **dadurch gekennzeichnet, dass** das Dispersionsmittel Wasser ist.

7. Reifendichtmittel nach Anspruch 5 oder 6, **dadurch gekennzeichnet, dass** der Anteil des Dispersionsmittels 25 bis 95 Gew.-% beträgt.

8. Reifendichtmittel nach einem der Ansprüche 5 bis 7, insbesondere in Verbindung mit Anspruch 7, **dadurch gekennzeichnet, dass** ein Teil des Dispersionsmittels durch ein Frostschutzmittel ersetzt ist.

9. Reifendichtmittel nach Anspruch 8, **dadurch gekennzeichnet, dass** in Bezug auf die Gesamtmenge an Dispersionsmittel der Anteil des Frostschutzmittels 1 bis 75 Teile beträgt.

10. Reifendichtmittel nach Anspruch 1, **dadurch gekennzeichnet, dass** der Anteil des Bindemittels 0,1 bis 40 Gew.-% beträgt.

11. Reifendichtmittel nach einem der Ansprüche 1 bis 10, **dadurch gekennzeichnet, dass** dieses ein Antiabsetzmittel als weitere Dichtmittelkomponente enthält.

12. Reifendichtmittel nach Anspruch 11, **dadurch gekennzeichnet, dass** der Anteil des Antiabsetzmittels 0,01 bis 20 Gew.-% beträgt.

13. Reifendichtmittel nach einem der Ansprüche 1 bis 12, **dadurch gekennzeichnet, dass** dieses einen Stabilisator als weitere Dichtmittelkomponente enthält.

14. Reifendichtmittel nach Anspruch 13, **dadurch gekennzeichnet, dass** der Anteil des Stabilisators 0,01 bis 20 Gew.-% beträgt.

15. Reifendichtmittel nach einem der Ansprüche 1 bis 14, **dadurch gekennzeichnet, dass** dieses einen Entschäumer als weitere Dichtmittelkomponente enthält.

16. Reifendichtmittel nach Anspruch 15, **dadurch gekennzeichnet, dass** der Anteil des Entschäumers 0,01 bis 5 Gew.-% beträgt

## Claims

1. Tyre sealant for sealing the site of damage, in particular the site of puncture, of a tyre, where once the said sealant has been introduced into the tyre it is distributed on the internal wall of the tyre via rotation of the wheel, where the tyre sealant penetrates into and/or onto the site of damage or site of puncture and seals the same in such a way that no further air can escape from the tyre, where the tyre sealant comprises, as sealant component, a proportion of from 5 to 75% by weight of a filler, the sealing action of which results from its structure, where the filler is a silicate with platelets or layer structure or is composed of glass platelets, and where the centrifugal force during travel forces the filler onto the internal wall of the tyre, and the filler here accumulates in the form of layers on and/or in and/or over the site of damage or site of puncture, and where the tyre sealant comprises, as further sealant component, a binder, **characterized in that** the binder is present in the form of a polymer dispersion based on a synthetic rubber latex selected from the group consisting of polyurethane and/or polyester and/or silicone rubber and/or styrene-butadiene rubber latex.

2. Tyre sealant according to Claim 1, **characterized in that** the sealing action is based exclusively on the structure of the filler.

3. Tyre sealant according to Claim 1, **characterized in that** the silicate filler is a mica.

4. Tyre sealant according to any of Claims 1 to 3, **characterized in that** the particle size of the filler is from 1 µm to 2 mm.

5. Tyre sealant according to any of Claims 1 to 4, **characterized in that** this comprises, as further sealant component, a dispersion medium.

6. Tyre sealant according to Claim 5, **characterized in that** the dispersion medium is water.

7. Tyre sealant according to Claim 5 or 6, **characterized in that** the proportion of the dispersion medium is from 25 to 95% by weight.

8. Tyre sealant according to any of Claims 5 to 7, in particular in conjunction with Claim 7, **characterized in that** a portion of the dispersion medium has been replaced by an antifreeze.

9. Tyre sealant according to Claim 8, **characterized in that** the proportion of the antifreeze is from 1 to 75 parts, based on the total quantity of dispersion medium.

10. Tyre sealant according to Claim 1, **characterized in that** the proportion of the binder is from 0.1 to 40% by weight.

11. Tyre sealant according to any of Claims 1 to 10, **characterized in that** this comprises, as further sealant component, an antisedimentation agent.

12. Tyre sealant according to Claim 11, **characterized in that** the proportion of the antisedimentation agent is from 0.01 to 20% by weight.

13. Tyre sealant according to any of Claims 1 to 12, **characterized in that** this comprises, as further sealant component, a stabilizer.

14. Tyre sealant according to Claim 13, **characterized in that** the proportion of the stabilizer is from 0.01 to 20% by weight.

15. Tyre sealant according to any of Claims 1 to 14, **characterized in that** this comprises, as further sealant component, an antifoam.

16. Tyre sealant according to Claim 15, **characterized in that** the proportion of the antifoam is from 0.01 to 5% by weight.

## Revendications

1. Agent d'étanchéité pour pneus pour l'étanchéification d'un emplacement endommagé, notamment d'un emplacement de piqûre, d'un pneu, qui est réparti sur la paroi intérieure du pneu après son introduction dans le pneu par rotation de la roue, l'agent d'étanchéité pour pneus pénétrant dans et/ou sur l'emplacement endommagé ou l'emplacement de piqûre et fermant celui-ci, de sorte que l'air ne peut plus s'échapper du pneu, l'agent d'étanchéité pour pneus contenant en tant que composant de l'agent d'étanchéité une charge en une proportion de 5 à 75 % en poids, dont l'effet d'étanchéité résulte de sa structure, la charge étant un silicate avec des plaquettes ou à structure stratifiée ou étant constituée de plaquettes de verre, et la charge étant comprimée par la force centrifuge lorsqu'elle est conduite sur la paroi intérieure du pneu et s'accumulant en couches sur et/ou dans et/ou au travers de l'emplacement endommagé ou de l'emplacement de piqûre, et l'agent d'étanchéité pour pneus contenant en tant que composant de l'agent d'étanchéité supplémentaire un liant, **caractérisé en ce que** le liant se présente sous la forme d'une dispersion polymère à base d'un latex de caoutchouc de synthèse, choisi dans le groupe constitué par le polyuréthane et/ou le polyester et/ou le caoutchouc de silicone et/ou le latex de caoutchouc de styrène-butadiène.

2. Agent d'étanchéité pour pneus selon la revendication 1, **caractérisé en ce que** l'effet d'étanchéification repose exclusivement sur la structure de la charge.

3. Agent d'étanchéité pour pneus selon la revendication 1, **caractérisé en ce que** la charge est un mica au regard du silicate.

4. Agent d'étanchéité pour pneus selon l'une quelconque des revendications 1 à 3, **caractérisé en ce que** la charge présente une taille de particule de 1 µm à 2 mm.

5. Agent d'étanchéité pour pneus selon l'une quelconque des revendications 1 à 4, **caractérisé en ce que** celui-ci contient un dispersant en tant que composant d'agent d'étanchéité supplémentaire.

6. Agent d'étanchéité pour pneus selon la revendication 5, **caractérisé en ce que** le dispersant est l'eau.

7. Agent d'étanchéité pour pneus selon la revendication 5 ou 6, **caractérisé en ce que** la proportion du dispersant est de 25 à 95 % en poids.

8. Agent d'étanchéité pour pneus selon l'une quelconque des revendications 5 à 7, notamment en connexion avec la revendication 7, **caractérisé en ce qu'**une partie du dispersant est remplacée par un agent antigel.

9. Agent d'étanchéité pour pneus selon la revendication 8, **caractérisé en ce que**, par rapport à la quantité totale du dispersant, la proportion d'agent antigel est de 1 à 75 parties.

10. Agent d'étanchéité pour pneus selon la revendication 1, **caractérisé en ce que** la proportion du liant est de 0,1 à 40 % en poids.

11. Agent d'étanchéité pour pneus selon l'une quelconque des revendications 1 à 10, **caractérisé en ce que** celui-ci contient un agent anti-dépôt en tant que composant de l'agent d'étanchéité supplémentaire.

12. Agent d'étanchéité pour pneus selon la revendication 11, **caractérisé en ce que** la proportion de l'agent anti-dépôt est de 0,01 à 20 % en poids.

13. Agent d'étanchéité pour pneus selon l'une quelconque des revendications 1 à 12, **caractérisé en ce que** celui-ci contient un stabilisateur en tant que composant de l'agent d'étanchéité supplémentaire.

14. Agent d'étanchéité pour pneus selon la revendication 13, **caractérisé en ce que** la proportion du stabilisateur est de 0,01 à 20 % en poids.

15. Agent d'étanchéité pour pneus selon l'une quelconque des revendications 1 à 14, **caractérisé en ce que** celui-ci contient un agent antimousse en tant que composant de l'agent d'étanchéité supplémentaire.

16. Agent d'étanchéité pour pneus selon la revendication 15, **caractérisé en ce que** la proportion de l'agent antimousse est de 0,01 à 5 % en poids.
